## Europäisches Patentamt

## European Patent Office

## Office européen des brevets

(11) Veröffentlichungsnummer: **0 230 291**
**A2**

(12) **EUROPÄISCHE PATENTANMELDUNG**

(21) Anmeldenummer: **87100574.0**

(22) Anmeldetag: **17.01.87**

(51) Int. Cl.⁴: **A 63 F 9/22**

(30) Priorität: **22.01.86 DE 3601813**

(43) Veröffentlichungstag der Anmeldung: **29.07.87**
**Patentblatt 87/31**

(84) Benannte Vertragsstaaten: **AT BE CH DE ES FR GB GR IT LI LU NL SE**

(71) Anmelder: **Steininger, Eduard, in der Au 1, D-6251 Zollhaus (DE)**
Anmelder: **Steininger, Udo, Brandenburger Strasse 57, D-6252 Diez a.d. Lahn (DE)**

(72) Erfinder: **Steininger, Eduard, in der Au 1, D-6251 Zollhaus (DE)**
Erfinder: **Steininger, Udo, Brandenburger Strasse 57, D-6252 Diez a.d. Lahn (DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich (DE)**

(54) **Videoautomat.**

(57) Die Erfindung betrifft einen Videoautomaten, insbesondere einen Video-Spielautomaten, bestehend aus einem Gehäuse, in dem sich eine Bedienungsarmatur, mindestens ein Lautsprecher und mindestens eine Bildröhre sowie eine elektronische und elektrische Schaltung und gegebenenfalls ein Münzautomat, befinden. Die Bildröhre des Videoautomaten ist in ihrer Bildebene mittels eines ansteuerbaren Motors schwenkbar gelagert und lässt sich mit Hilfe des Motors entsprechend der einstellbaren Position eines Programmwahlschalters und dem damit ausgewählten Programm (Spiel) in die diesem Programm entsprechende Position schwenken. Hierzu ist die Bildröhre mit einem ringförmigen, auf Rollen gelagerten und drehbaren Rahmen mittels einer auf den äusseren Rand des Rahmen einwirkbaren Andruckrolle des ansteuerbaren Getriebemotors schwenkbar ausgebildet. Sämtliche Video-Steuerfunktionen eines mittels einer Programmplatine festgelegten und durch Betätigung eines Programmwahlschalters auswählbaren Programms (Spieles) und einer dadurch bewirkten Ansteuerung einer entsprechend zogeordneten Schaltergruppe in der Bildröhre zuführbar. Jede Schaltergruppe beaufschlagt einen ihr zugeordneten und mit dem Motor verbundenen Motorpositionsschalter, welcher seinerseits jeweils den Motor ansteuert.

BESCHREIBUNG:

Die Erfindung betrifft einen Videoautomat, insbesondere Video-Spielautomat, bestehend aus einem Gehäuse, in dem sich eine Bedienungsarmatur, mindestens ein Lautsprecher und mindestens eine Bildröhre sowie eine elektronische und elektrische Schaltung und gegebenenfalls ein Münzautomat befinden, wobei die Bildröhre in ihrer Bildebene mittels eines Motors drehbar gelagert ist.

Mit der fortschreitenden Entwicklung der Bildschirmgeräte und insbesondere der Mikroprozessortechnik wurden auch für Zwecke beispielsweise der Unterhaltung und der Ausbildung komplizierte Programme entwickelt, welche bestimmte Abläufe als Simulation von möglichen Ereignissen darstellen. Derartige Geräte finden als Simulatoren Anwendung, beispielswweise in Fahrschulen, Pilotenschulen oder dergleichen.

Auch für Unterhaltungszwecke werden die Spielprogramme aufwendiger, da auch der Verbraucher zunehmend höhere Ansprüche stellt. So besteht das Bedürfnis nach beipielsweise nicht nur umfangreicheren Spielen, sondern der Verbraucher wünscht auch eine Vielzahl verschiedener Programme, so daß der Unterhaltungswert damit auch gesteigert wird.

Um diesem Bedürfnis abzuhelfen, wurden bereits Video-Spielautomaten entwickelt, welche mit unterschiedlichen Programmen geladen werden, die sich der Verbraucher auswählen kann.

Die ursprünglich entwickelte Braunsche Röhre, welche die Basis eines Monitors bildet, weist eine runde Bildschirmform auf, jedoch wurden insbesondere zu Zwecken der Fernsehtechnik Bildschirmröhren hergestellt, welche eine ovale oder eine nahezu rechteckförmige Ausbildung mit unterschiedlichen Kantenlängen aufweisen, wobei der Bildschirm

40

im Querformat verwendet wird. Die überwiegende Zahl aller Ereignisse finden in der Ebene statt oder lassen sich in der Ebene darstellen, so daß sich hierfür das Querformat am besten eignet.

Für Spezialzwecke wurden Bildschirme entwickelt, welche ein Hochformat aufweisen, beispielsweise für Personalcomputer, die überwiegend für Schreibprogramme eingesetzt werden. Auf diese Weise läßt sich auf dem Bildschirm bequem eine DIN A4-Seite wiedergeben.

Insbesondere bei Spielprogrammen finden sich solche, die im Hochformat darzustellen sind, wie beipielsweise Raumfahrtspiele, während eine andere Gruppe von Spielen sich besser für eine Darstellung im Querformat eignet. Bisher hat man dieses Problem so gelöst, daß für jede Spielgruppe unterschiedliche Geräte verwendet werden. Die Geräte selbst werden jedoch ebenfalls aufwendiger und damit auch teurer und wenn beispielsweise ein Restaurant eine möglichst große Variation von Spielen anbieten will, so ist es erforderlich, mindestens zwei Geräte aufzustellen. Hieraus ergibt sich ferner ein Platzproblem.

Der Erfindung liegt somit die Aufgabe zugrunde, hier Abhilfe zu schaffen und ein Gerät vorzuschlagen, welches in der Lage ist, Videoprogramme sowohl im Hoch- als auch im Querformat wiedergeben zu können, ohne daß seitens des Spielers irgendwelche Manipulationen erforderlich sind oder die Spielprogramme ein entsprechendes Steuerprogramm aufweisen.

Die Lösung dieser Aufgabe erfolgt dadurch, daß bei dem eingangs genannten Videoautomaten die Bildröhre mit Hilfe eines ansteuerbaren Motors entsprechend der einstellbaren Position eines Programmwahlschalters und einer dadurch bewirkten Ansteuerung einer entsprechend zugeordneten Schaltergruppe und dem damit ausgewählten Programm (Spiel) in die diesem Programm entsprechende Position bringbar ist und die Bildröhre mit einem ringförmigen, auf Rollen gelagerten und in der Bildebene liegenden, drehbaren Rahmen mittels einer auf den äußeren Rand des Rahmens einwirkbaren Andruckrolle des ansteuerbaren Getriebemotors drehbar ausgebildet ist.

Durch die Auswahl eines Programmes erfolgt gemäß der Erfindung automatisch die Einstellung einer Position des Bildschirmformates im Hoch- oder Querformat, welche durch das ausgewählte Programm bedingt wird. Die Bedienungsperson hat auf diese Positionierung - bis auf die Programmauswahl - keinen Einfluß.

Der Winkel der Schwenkbewegung des ringförmigen Rahmens beträgt 90°, so daß dadurch die Umpositionierung vom Hochin ein Querformat oder umgekehrt gegeben ist.

In Weiterbildung der Erfindung weist der äußere Rand des Rahmens zur Endpositionierung seiner Schwenkbewegung Anschläge auf, welche auf den Antriebsmotor einwirkbar angeordnet sind. Auf diese Weise wird der Motor bei Erreichen seiner Endposition automatisch abgeschaltet.

Nach der Erfindung sind sämtliche Video-Steuerfunktionen eines mittels einer Programmplatine festgelegten und durch Betätigung eines Programmwahlschalters auswählbaren Programmes (Spieles) und einer dadurch bewirkten Ansteuerung einer entsprechend zugeordneten Schaltergruppe der Bildröhre zuführbar. Jede Schaltergruppe beaufschlagt in vorteilhafter Weise einen ihr zugeordneten und mit dem Motor verbundenen Motorpositionsschalter, welcher seinerseits jeweils den Motor ansteuert.

Jeder Programmplatine ist nach der Erfindung eine Schaltergruppe zugeordnet, weche mit Hilfe des Programmwahlschalters ansteuerbar ist.

In vorteilhafter Weise sind mehrere Schaltergruppen einem Motorpositionsschhalter zugeordnet und jeder Motorpositionsschalter beaufschlagt bei Erregung den Motor, derart, daß die Bildröhre die dem Motorpositionsschalter zugeordnete Position einnimmt.

Die Erfindung wird anhand der Zeichnung näher erläutert. Hierbei zeigen:

FIGUR 1   eine Seitenansicht eines Video-Spielautomaten;

FIGUR 2   eine Frontansicht eines Video-Spielautomaten;

FIGUR 3   eine Seitenansicht eines Video-Spielautomaten im Schnitt;

FIGUR 4   eine Frontansicht eines Video-Spielautomaten im Schnitt, und

FIGUR 5   eine Schaltung eines Video-Spielautomaten in schematischer Darstellung.

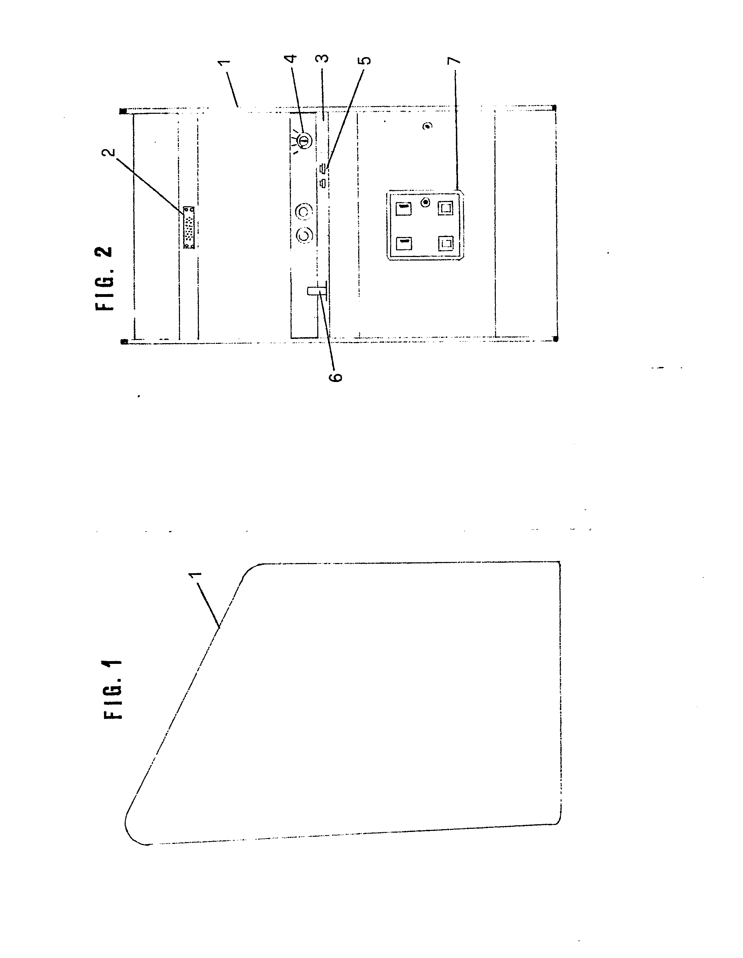

Die Figur 1 zeigt die äußere Gehäuseform des Video-Spielautomaten 1 und die Figur 2 die entsprechende Frontansicht. Im oberen Teil des VideoSpielautomaten 1 befindet sich ein Lautsprecher 2 und im mittleren Teil die Bedienungsarmatur 3 mit einem Programmwahlschalter 4, zwei Spielknöpfen 5 und einem Spielhebel 6. Der untere Teil des Gerätes nimmt einen Münzautomaten auf, welcher nicht Gegenstand der Erfindung ist.

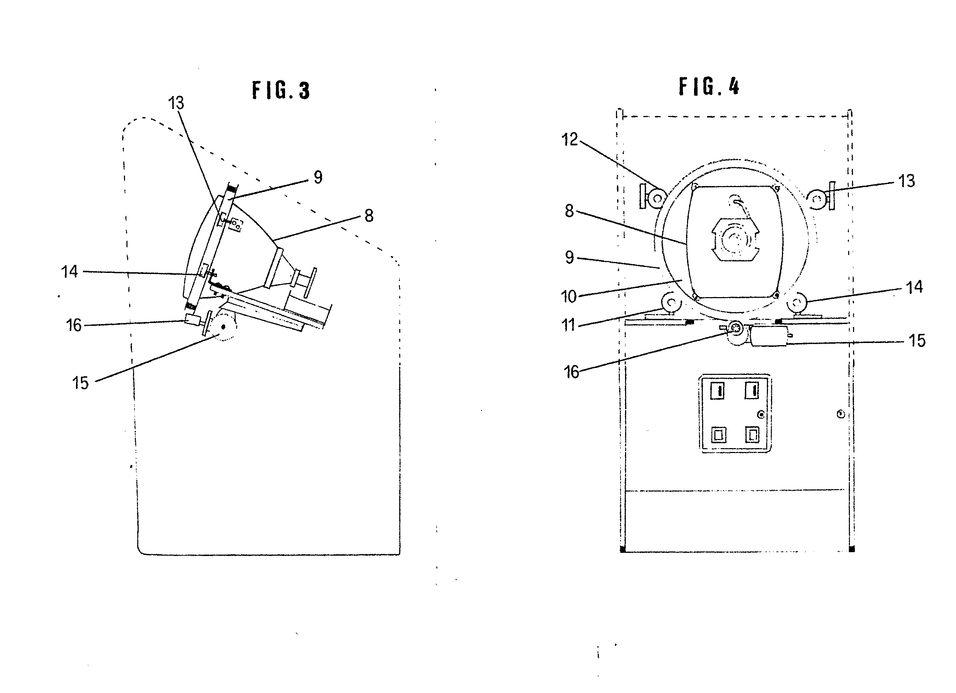

Die Figuren 3 und 4 entsprechen den Figuren 1 und 2, jedoch zeigen sie im Schnitt die Anordnung und Ausbildung des Monitors oder Bildschirmes 8. Dieser ist mit einem ringförmigen Rahmen 9 befestigt und zwischen dem Rahmen 9 und dem Bildschirm 8 ist eine Holzverkleidung 10 angebracht. Der ringförmige Rahmen 9 ist auf Rollen 11, 12, 13 und 14 drehbar gelagert und ein Motor 15, welcher als Getriebemotor ausgebildet ist, weist eine Gummiandruckrolle 16 auf, welche für eine Übertragung der Drehkräfte sorgt.

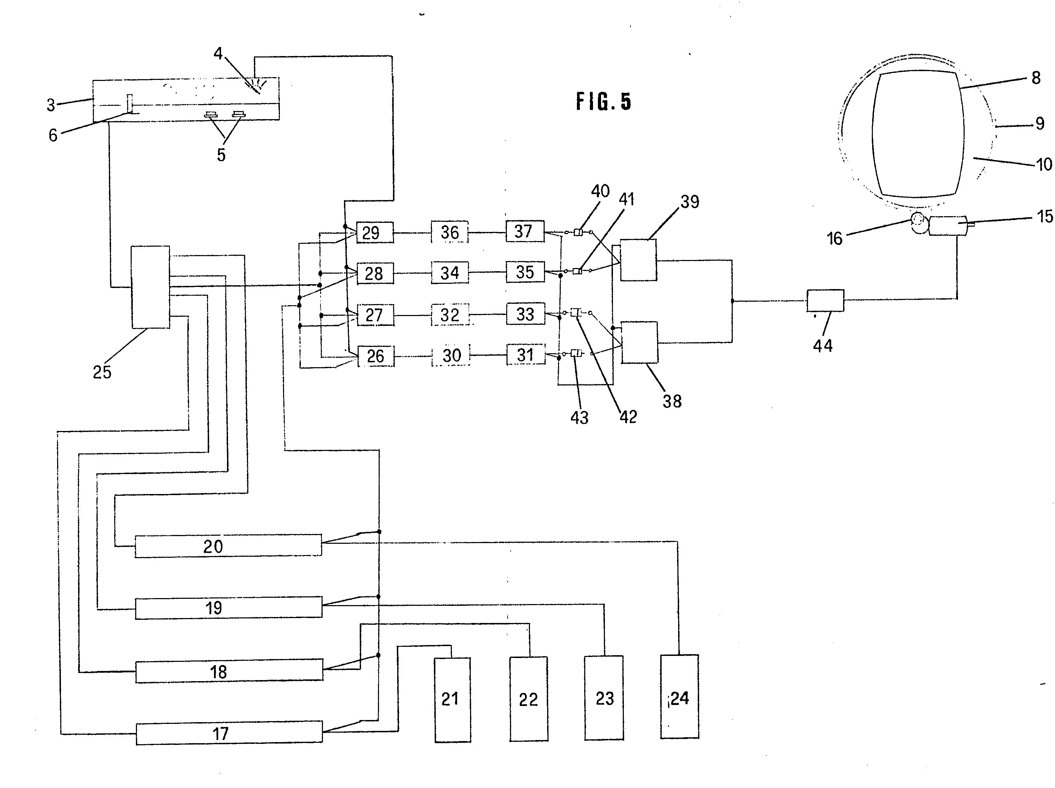

Wird der Motor 15 mit einer Spannung beaufschlagt, wie noch später anhand der Figur 5 näher erläutert wird, so überträgt die Gummiandruckrolle ihre Drehkraft auf den ringförmigen Rahmen 9 und der Bildschirm 8 führt eine Schwenkbewegung um einen Winkel von 90° aus, so daß er seine Position von einem Hoch- in ein Querformat oder umgekehrt ändert.

Die Figur 5 zeigt die elektrische Schaltung des Video-Spielautomaten 1 zur automatischen Durchführung einer Schwenkbewegung des Bildschirmes 8 in seiner Bildebene um einen Winkel von 90° mit Hilfe des Motors 15 und seiner Antriebsrolle 16. Die hier dargestellte Schaltung wird zur Vereinfachung mit Relais beschrieben. Es können natürlich auch entsprechende Halbleiterschaltelemente und Mikroprozessoren verwendet werden.

In dem hier beschriebenen Beispiel werden vier Programmplatinen 17, 18, 19 und 20 verwendet, welche in an sich bekannter Weise als Steckplatinen ausgebildet sind. Es kann auch eine größere Zahl von Programplatinen verwendet werden. Jede Platine enthält ein eigenes Spielprogramm und jedem Spielprogramm ist die geeignete Lageposition des Bildschirmes 8, nämlich ein Hoch- oder ein Querformat vorgegeben.

Jede Programmplatine 17, 18, 19 und 20 ist mit einer eigenen Energieversorgung 21, 22, 23, und 24 ausgerüstet. Von den Programmplatinen 17, 18, 19 und 20 führen elektrische Leitungen zu einer Verteilerschaltung 25, welche gleichartige Funktionsleitungen zusammenführt.

Jeder Programmplatine 17, 18, 19 und 20 ist ferner eine Schalterreihe 26, 27, 28 und 29 zugeordnet, welche mit der Verteilerschaltung 25 und mit dem Programmwahlschalter 4 elektrisch verbunden ist. Zur Schalterreihe 26 gehören die Schalter oder Relais 30 und 31; zur Schalterreihe 27 die Schalter oder Relais 32 und 33; zur Schalterreihe 28 die Schalter oder Relais 34 und 35, und zur Schalterreihe 29 die Schalter oder Relais 36 und 37. Jede Schalterreihe ist durch eine Diode 40 bzw. 41, bzw. 42 bzw. 43 gegen Rückströme abgesichert. Den Schalterreihen schließen ich Motorrelais 38 und 39 an. Jedem Relais 38 oder 39 ist eine Position des Bildschirmes 8 zugeordnet, d.h. wenn zum Beispiel das Relais 38 erregt wird, schaltet es den Motor 15 an und dieser nimmt die vorbestimmte Position ein. Entsprechendes gilt für das Relais 39. Zwischen diesen Relais 38 und 39 und dem Motor 15 liegt ein konventionelles Entstörfilter.

Jede Schaltergruppe 26, 27, 28 und 29 ist entsprechend dem zugehörigen Programm einem Motorrelais 38 oder 39 zugeordnet.

Mit dem Programmwahlschalter 4 stellt die Bedienungsperson das gewünschte Spiel ein. Hierdurch wird die entsprechende Programmplatine, beispielsweise die Programmplatine 17 angesteuert und die dazugehörige Schalterreihe 26 mit den weiteren Relais 30 und 31 erregt. Das Motorrelais 38 schaltet damit durch und der Motor 15 nimmt die Position ein, welche diesem Motorrelais 38 zugeordnet ist.

0230291
SN 8501

Die Relais 26, 30 und 31 sorgen ferner dafür, daß sämtliche Videofunktionen bzw. Videosignalkanäle der ausgewählten Programmplatine getrennt von den Videofunktionen bzw. bzw. Videokanälen der anderen Programmplatinen auf den Monitor bzw. Bildschirm geschaltet werden. Hierzu zählen beispielsweise vier Kanäle für die vier geometrischen Richtungen des Cursors, welche durch den Spielhebel 6 gesteuert werden, drei Farbkanäle, ein Synchronsignal-Kanal und zwei oder vier Tonsignal-Kanäle. Wird der Programmwahlschalter auf ein anderes Programm geschaltet läuft ein entsprechender Vorgang, wie beschrieben, ab.

PATENTANSPRÜCHE

1. Videoautomat, insbesondere Video-Spielautomat, bestehend aus einem Gehäuse, in dem sich eine Bedienungsarmatur, mindestens ein Lautsprecher und mindestens eine Bildröhre sowie eine elektronische und elektrische Schaltung und gegebenenfalls ein Münzautomat befinden, und die Bildröhre in ihrer Bildebene mittels eines Motors drehbar gelagert ist, dadurch gekennzeichnet, daß die Bildröhre (8) mit Hilfe eines ansteuerbaren Motors (15) entsprechend der einstellbaren Position eines Programmwahlschalters (4) und einer dadurch bewirkten Ansteuerung einer entsprechend zugeordneten Schaltergruppe (26, 27, 28 und 29) und dem damit ausgewählten Programm (Spiel) in die diesem Programm entsprechende Position bringbar ist und die Bildröhre (8) mit einem ringförmigen, auf Rollen (11, 12, 13, und 14) gelagerten und in der Bildebene liegenden, drehbaren Rahmen (9) mittels einer auf den äußeren Rand des Rahmens (9) einwirkbaren Andruckrolle (16) des ansteuerbaren Getriebemotors (15) drehbar ausgebildet ist.

2. Videoautomat nach Anspruch 1, dadurch gekennzeichnet, daß der äußere Rand des Rahmens (9) zur Endpositionierung seiner Schwenkbewegung Anschläge aufweist, welche auf den Antriebsmotor (15) einwirkbar angeordnet sind.

3. Videoautomat nach Anspruch 1 oder 2, dadurch gekennzeichnet, daß sämtliche Video-Steuerfunktionen eines mittels einer Programmplatine (17, 18, 19, und 20) festgelegten und durch Betätigung des Programmwahlschalters (4) auswählbaren Programmes (Spieles) und der dadurch bewirkten Ansteuerung einer entsprechend zugeordneten Schaltergruppe (26, 27, 28, und 29) der Bildröhre (8) zuführbar sind und daß jede Schaltergruppe (26, 27, 28, und 29) einen ihr zugeordneten und mit dem Motor (15) verbundenen Motorpositionsschalter (38 bzw. 39) beaufschlagt.

4. Videoautomat nach Anspruch 1 oder einem der voranstehenden Ansprüche, dadurch gekennzeichnet, daß jeder Programmplatine (17, 18, 19, und 20) eine Schaltergruppe (26, 27, 28, und 29) zugeordnet ist, welche mit Hilfe des Programmwahlschalters (4) ansteuerbar ist.

5. Videoautomat nach Anspruch 1 oder einem der voranstehenden Ansprüche, dadurch gekennzeichnet, daß mehrere Schaltergruppen (26, 27, 28, und 29) einem Motorpositionsschhalter (38, 39) zugeordnet sind.

6. Videoautomat nach Anspruch 1 oder einem der voranstehenden Ansprüche, dadurch gekennzeichnet, daß jeder Motorpositionsschalter (38, 39) bei Erregung den Motor (15) beaufschlagt, derart, daß die Bildröhre (8) die dem Motorpositionsschalter(38 bzw. 39) zugeordnete Position einnimmt.

FIG. 1

FIG. 2

1/3

0230291

FIG. 3

FIG. 4

4/3

0230291

FIG. 5